# EUROPEAN PATENT APPLICATION

(11) **EP 4 651 415 A1**
(43) Date of publication of application: **19.11.2025**
(21) Application number: 23915330.7
(22) Date of filing: 12.01.2023
(51) Int. Cl.: H04L 5/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN)
(74) Representative: Mewburn Ellis LLP
(86) International application number: PCT/CN2023/071884
(87) International publication number: WO 2024/148559

(57) **Abstract**

A wireless communication method, a terminal device, and a network device. The method comprises: a terminal device sending one or more scheduling-free physical uplink shared channels (PUSCHs), wherein the plurality of scheduling-free PUSCHs are associated with different spatial parameters.

## Description

### TECHNICAL FIELD

Embodiments of the present application relate to the field of communication, and in particular, to a wireless communication method, a terminal device, and a network device.

### BACKGROUND

In some scenarios, if a terminal device is configured with a plurality of antenna panels, the terminal device may transmit physical uplink shared channels (PUSCHs) through the plurality of panels to improve spectrum efficiency of the uplink. The PUSCHs may be scheduled by single-downlink control information (DCI) or multi-DCI. However, how to transmit scheduling-free PUSCHs is an urgent problem to be solved.

### SUMMARY

The present application provides a wireless communication method, a terminal device and a network device, which are conducive to improving transmission performance of an uplink.

In a first aspect, a wireless communication method is provided, and the method includes transmitting, by a terminal device, one or more scheduling-free physical uplink shared channels (PUSCHs). The scheduling-free PUSCHs are associated with different spatial parameters.

In a second aspect, a wireless communication method is provided, and the method includes receiving, by a network device, one or more scheduling-free physical uplink shared channels (PUSCHs). The scheduling-free PUSCHs are associated with different spatial parameters.

In a third aspect, a terminal device is provided, which is used to perform the method in the first aspect or its various implementations.

Specifically, the terminal device includes a functional module used to perform the method in the first aspect or its various implementations.

In a fourth aspect, a network device is provided, which is used to perform the method in the second aspect or its various implementations.

Specifically, the terminal device includes a functional module used to perform the method in the second aspect or its various implementations.

In a fifth aspect, a terminal device is provided, and the terminal device includes a processor and a memory. The memory is used to store a computer program, and the processor is used to call and run the computer program stored in the memory to perform the method in the first aspect or its various implementations.

In an sixth aspect, a network device is provided, and the network device includes a processor and a memory. The memory is configured to store a computer program, and the processor is used to call and run the computer program stored in the memory to perform the method in the second aspect or its various implementations.

In a seventh aspect, a chip is provided, which is used to implement the method in any aspect of the first aspect and the second aspect or various implementations thereof.

Specifically, the chip includes a processor, and the processor is used to call and run a computer program from a memory to cause a device equipped with the apparatus to perform the method in any aspect of the first aspect and the second aspect or various implementations thereof.

In an eighth aspect, a computer-readable storage medium is provided, which is used to store a computer program. The computer program causes a computer to perform the method in any aspect of the first aspect and the second aspect or various implementations thereof.

In a ninth aspect, a computer program product is provided, which includes computer program instructions. The computer program instructions cause a computer to perform the method in any aspect of the first aspect and the second aspect or various implementations thereof.

In a tenth aspect, a computer program is provided, and the computer program, when executed on a computer, causes a computer to perform the method in any aspect of the first aspect and the second aspect or various implementations thereof.

Through the above technical solutions, the terminal device may transmit one or more scheduling-free PUSCHs to the network device. The terminal device may use different spatial parameters to transmit the scheduling-free PUSCHs, which is beneficial to improving the transmission performance of the uplink.

### BRIEF DESCRIPTION OF THE DRAWINGS

FIG. 1 is a schematic diagram showing an architecture of a communication system provided in embodiments of the present application.
FIG. 2 is a schematic diagram showing simultaneous transmission of a plurality of panels.
FIG. 3 is a schematic interaction diagram of a wireless communication method provided in embodiments of the present application.
FIG. 4 is a schematic diagram showing a first PUSCH and a second PUSCH overlapping in a time domain.
FIG. 5 is a schematic diagram showing interference between a first PUSCH and a second PUSCH.
FIG. 6 is a schematic block diagram of a terminal device provided in embodiments of the present application.
FIG. 7 is a schematic block diagram of a network device provided in embodiments of the present application.
FIG. 8 is a schematic block diagram of a communication device provided in embodiments of the present application.
FIG. 9 is a schematic block diagram of a chip provided in the embodiments of the present application.
FIG. 10 is a schematic block diagram of a communication system provided in the embodiments of the present application.

### DETAILED DESCRIPTION

Technical solutions in embodiments of the present application will be described below with reference to the accompanying drawings of the embodiments of the present application. Obviously, the described embodiments are some but not all of the embodiments of the present application. All other embodiments obtained based on the embodiments of the present application by those ordinary skilled in the art without devoting creative efforts shall be included in the protection scope of the present application.

The technical solutions of the embodiments of the present application may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (NTN) system, a universal mobile telecommunication system (UMTS), a wireless local area network (WLAN), a wireless fidelity (WiFi), a 5th-generation (5G) communication system, or other communication systems.

Generally speaking, the limited number of connections supported by a traditional communication system is easy to be implemented. However, with the development of the communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, and the embodiments of the present application may also be applied to these communication systems.

Optionally, the communication system in the embodiments of the present application may be applied to a carrier aggregation (CA) scenario, a dual connectivity (DC) scenario, or a standalone (SA) network deployment scenario.

Optionally, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

The embodiments of the present application are described in conjunction with a network device and a terminal device. The terminal device may also be referred to as a user equipment (UE), an access terminal, a user unit, a user station, a mobile station, a mobile console, a remote station, a remote terminal, a mobile device, a user terminal, a terminal, a wireless communication device, a user agent or user apparatus, or the like.

The terminal device may be a station (STA) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a terminal device in a next-generation communication system (such as in an NR network), a terminal device in a public land mobile network (PLMN) evolved in the future, or the like.

In the embodiments of the present application, the terminal device may be deployed on land, which includes indoor or outdoor, handheld, worn or vehicle-mounted, or may also be deployed on water (e.g., on a ship), or may also be deployed in the air (e.g., on an airplane, a balloon, and a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may be also referred to as a wearable smart device, is a generic term for devices capable of being worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not only a hardware device, but also achieves powerful functions through software support, data interaction, and cloud interaction. A generalized wearable smart device includes, for example, a smartwatch or smart glasses, with full functions, large size, and entire or partial functions without relying on a smartphone, as well as, for example, a smart bracelet or smart jewelry for physical sign monitoring, which only focuses on a certain type of application function and needs to be used in conjunction with other devices such as a smartphone.

In the embodiments of the present application, the network device may be a device used for communicating with a mobile device. The network device may be an access point (AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, a relay station or access point, a vehicle-mounted device, a wearable device, a network device (gNB) in an NR network, a network device in the PLMN evolved in the future, a network device in the NTN, or the like.

As an example but not a limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water, or other places.

In the embodiments of the present application, the network device may provide a service for a cell, and the terminal device communicates with the network device through a transmission resource (e.g., a frequency domain resource, or a frequency spectrum resource) used by the cell. The cell may be a cell corresponding to the network device (e.g., a base station). The cell may belong to a macro base station or a base station corresponding to a small cell. The small cells here may include a metro cell, a micro cell, a pico cell, a femto cell, etc. These small cells have features of a small coverage range and a low transmit power, which are applicable for providing a data transmission service with high speed.

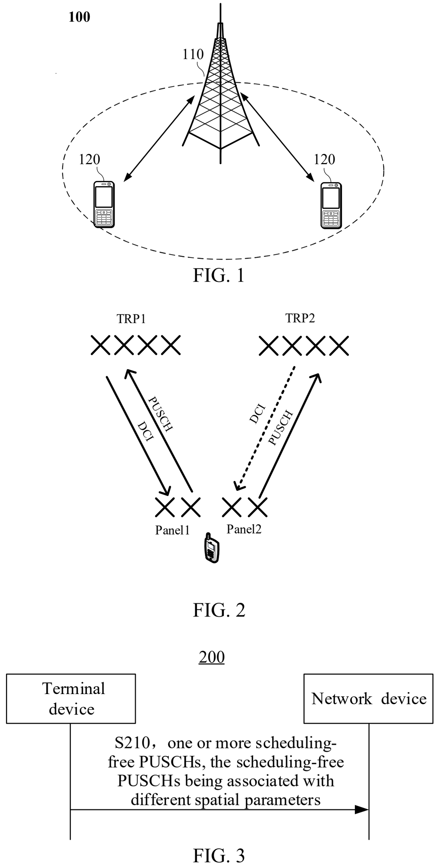

Exemplarily, a communication system 100 utilized in the embodiments of the present application is shown in FIG. 1. The communication system 100 may include a network device 110, and the network device 110 may be a device that communicates with a terminal device 120 (also referred to as a communication terminal or a terminal). The network device 110 may provide communication coverage for a specific geographical area and may communicate with a terminal device located within the coverage area.

FIG. 1 exemplarily illustrates one network device and two terminal devices. Optionally, the communication system 100 may include a plurality of network devices, and may include other numbers of terminal devices within a coverage range of each network device, which are not limited in the embodiments of the present application.

Optionally, the communication system 100 may further include other network entities such as a network controller and a mobility management entity, which is not limited in the embodiments of the present application.

It should be understood that in the embodiments of the present application, a device with a communication function in the network/system may be referred to as a communication device. Taking the communication system 100 shown in FIG. 1 as an example, communication devices may include the network device 110 and the terminal device 120 that have the communication function. The network device 110 and the terminal device 120 may be the specific devices described above, which will not be repeated here. The communication devices may further include other devices in the communication system 100, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that related objects before and after "/" are in an "or" relationship.

It should be understood that "indicate" mentioned in the embodiments of the present application may mean a direct indication, may mean an indirect indication, or may mean that there is an association relationship. By way of example, A indicates B, which may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence between two, may mean that there is an associated relationship between the two, or may mean a relationship of indicating and being indicated, a relationship of configuring and being configured, or the like.

In the embodiments of the present application, "predefined" may be implemented by pre-saving corresponding codes, tables or other manners usable for indicating related information, in the devices (for example, including the terminal device and the network device), and the present application does not limit its specific implementation. For example, the predefined may refer to being defined in a protocol.

In the embodiments of the present application, the "protocol" may refer to a standard protocol in the field of communication, which may include, for example, an LTE protocol, an NR protocol, and related protocols used in future communication systems, which is not limited in the present application.

To facilitate better understanding of the embodiments of the present application, a transmission scheme of a plurality of transmission reception points (TRPs) for downlink related to the present application is described.

Non-coherent transmission based on a plurality of TRPs for downlink and uplink is introduced in the NR system. Ideal backhaul connection between TRPs may be ideal or non-ideal. Under the ideal backhaul, TRPs may exchange information quickly and dynamically, while under the non-ideal backhaul, TRPs may only exchange information quasi-statically due to large delay. In downlink non-coherent transmission, a plurality of TRPs may use different control channels to independently schedule a plurality of physical downlink shared channel (PDSCH) transmissions of one terminal, or use a same control channel to schedule transmissions of different TRPs. Data of different TRPs use different transmission layers, and the latter may only be used in ideal backhaul situations.

The network device may schedule the terminal device to transmit physical uplink shared channels (PUSCHs) to two TRPs via single downlink control information (DCI). The PUSCHs transmitted to the two TRPs may be configured with independent transmission parameters, such as beam and precoding matrix, and the numbers of transmission layers of the PUSCHs transmitted to the two TRPs are the same. In some scenarios, the PUSCHs transmitted to the two TRPs are transmitted in a time division multiplexing (TDM) manner. PUSCHs transmitted by the terminal device to different TRPs is aligned with corresponding TRPs for analog beamforming, thereby distinguishing different PUSCHs in the spatial domain and providing spectrum efficiency of the uplink. For codebook-based PUSCH transmission, the single DCI needs to contain two SRS resource indicator (SRI) fields and two precoding information and numbers of layers fields. The network device configures two SRS resource sets, and a first SRI field and a second SRI field correspond to two SRS resource sets, which are used to indicate beam directions of PUSCHs transmitted to the two TRPs. The second precoding information and number of layers field only needs to indicate the precoding information, and the number of layers defaults to the same as the number of layers indicated by the first precoding information and number of layers field. For non-codebook based PUSCH transmission, the single DCI needs to contain two SRI fields. A first SRI field is used to indicate the beam direction and number of transmission layers of the PUSCH, and a second SRI field is used to indicate the beam direction of the PUSCH, and the number of transmission layers field is the same as the number of transmission layers indicated by the first SRI. In the above description, the beam direction of the PUSCH is the same as the beam direction of the SRS resource indicated by the SRI.

The network device may also schedule the terminal device to transmit PUSCHs to two TRPs via multi-DCI, and the multi-DCI may be carried in different control resource sets (CORESETs). Specifically, a plurality of CORESET groups are configured on a network device side, and each TRP is scheduled using a CORESET in its own CORESET group. That is, different TRPs may be distinguished by the CORESET groups. For example, the network device may configure one CORESET group index for each CORESET, and different indices correspond to different TRPs.

In some scenarios, PDSCHs from two TRPs scheduled by single-DCI (s-DCI) may be distinguished through transmission configuration indicator (TCI) states. One state of the TCI information field in the DCI may be mapped to up to two TCI states, and each TCI state corresponds to one of the PDSCHs transmitted using frequency-division multiplexing (FDM) or spatial division multiplexing (SDM).

Due to different spatial positions of different TRPs, large-scale characteristics of channels corresponding to various TRPs have obvious differences. Therefore, when a plurality of TRPs perform jointly transmission, it is necessary to indicate pieces of quasi-co-located (QCL) information corresponding to various TRPs separately. In some cases, one state of the TCI information field in the DCI corresponds to only one TCI state. In order to support multi-TRP-based transmission, media access control control element (MAC CE) signaling is enhanced. That is, one state of the TCI information field in the DCI may be mapped to up to two TCI states. If the TCI information field indicated in the DCI indicates two TCI states, a PDSCH associated with a first TCI state will be transmitted using a DMRS port indicated in a first code division multiplexing (CDM) group, and a PDSCH associated with a second TCI state will be transmitted using a DMRS port indicated in a second CDM group. The beam direction of the PDSCH is the same as a beam direction of a synchronization signal block (SSB) or a channel state information reference signal (CSI-RS) corresponding to the TCI state.

The configuration and indication of TCI state includes three steps: radio resource control (RRC) configuration, MAC CE activation and DCI indication. The specific process is as follows.

RRC configures up to M TCI states for the terminal via PDSCH configuration (PDSCH-Config), where a value of M is determined by the UE capability and a maximum value of M may be 128.

MAC CE activates up to 8 TCI state groups for mapping to the 3-bit TCI information field in DCI. Each TCI state group activated by the MAC CE may contain 1 or 2 TCI states. If the high-layer parameter configuration DCI includes a TCI indication field, DCI format 1_1 may indicate one TCI state group from the TCI state groups activated by MAC. If the high-level parameter configuration DCI does not include the TCI indication field or the data is scheduled via DCI format 1_0, the DCI will not include the TCI state indication field.

One TCI state may include the following configurations:
TCI state ID, used to identify one TCI state;
QCL information 1; and
QCL Information2.

A piece of QCL information contains the following information:
QCL type configuration, which may be one of QCL type A, QCL type B, QCL type C, or QCL type D; and
QCL reference signal configuration, which includes a cell ID where the reference signal is located, a band width part (BWP) ID, and reference signal information (which may be a channel state information reference signal (CSI-RS) resource ID or a synchronization signal block (SSB) index).

Definitions of different QCL type configurations are as follows:
'QCL-TypeA': {Doppler shift, Doppler spread, average delay, delay spread};
'QCL-TypeB': {Doppler shift, Doppler spread};
'QCL-TypeC': {Doppler shift, average delay};
'QCL-TypeD': {Spatial Rx parameter}.

To facilitate better understanding of the embodiments of the present application, the transmission scheme of the plurality of TRP for the uplink or antenna panel related to the present application will be described.

As shown in FIG. 2, if the terminal device is configured with a plurality of panels and supports simultaneous transmission of uplink information on the plurality of panels, pieces of uplink information may be transmitted on the plurality of panels at the same time to improve the spectrum efficiency of the uplink. Uplink transmission of the plurality of panels or TRPs may be scheduled via single-DCI or multi-DCI. PUSCHs transmitted by the terminal device may be in a unified TCI (unified TCI state) scenario. The PUSCHs are associated with different TCI states and may not overlap, partially overlap, or completely overlap in the time domain.

In some scenarios, the terminal device also needs to transmit a scheduling-free PUSCH, such as scheduling-free PUSCH of type 1 or scheduling-free PUSCH of type 2. The scheduling-free PUSCH of type 1 is configured via RRC and does not require detection of DCI. The scheduling-free PUSCH of type 2 is scheduled and configured via RRC, and activated and deactivated via DCI. In this case, how to perform transmission of the scheduling-free PUSCH is an urgent problem to be solved.

To facilitate understanding of the technical solutions in the embodiments of the present application, the technical solutions of the present application will be described in detail below through specific embodiments. The above related technologies, as optional solutions, may be arbitrarily combined with the technical solutions of the embodiments of the present application, which all falls within the protection scope of the embodiments of the present application. The embodiments of the present application include at least a part of the following contents.

FIG. 3 is a schematic interaction diagram of a wireless communication method 200 according to the embodiments of the present application. As shown in FIG. 3, the method 200 includes at least a part of the following contents.

In S210, a terminal device transmits one or more scheduling-free physical uplink shared channels (PUSCHs). The scheduling-free PUSCHs are associated with different spatial parameters.

In some embodiments, a type of the scheduling-free PUSCH may be type 1 or type 2. The scheduling-free PUSCH of type 1 is activated and deactivated via RRC signaling, and the scheduling-free PUSCH of type 2 is scheduled and configured via RRC signaling and activated or deactivated via DCI.

For example, in a case where a terminal device transmits one scheduling-free PUSCH, the one scheduling-free PUSCH may be the scheduling-free PUSCH of type 1 or the scheduling-free PUSCH of type 2.

For another example, in a case where the terminal device transmits scheduling-free PUSCHs, the scheduling-free PUSCHs may include the scheduling-free PUSCHs of type 1 and/or the scheduling-free PUSCHs of type 2. That is, the scheduling-free PUSCHs may all be the scheduling-free PUSCHs of type 1, or may all be the scheduling-free PUSCHs of type 2, or may include the scheduling-free PUSCHs of type 1 and the scheduling-free PUSCHs of type 2.

In some embodiments, the spatial parameter may refer to spatial setting, a spatial relation, or the like for PUSCH transmission.

In some embodiments, the spatial parameter includes but is not limited to at least one of:
reference signal set information, transmission configuration indicator (TCI) state information, antenna panel information, control resource set group (coresetPoolIndex) information, or beam information.

In some embodiments, the reference signal set information may be SRS resource set information, SSB resource set information, or CSI-RS resource set information, etc. For example, the reference signal set information may include a reference signal set index, such as an SSB set index, a CSI-RS resource set index, or an SRS resource set index (SRS-ResourceSetId).

In some embodiments, the antenna panel information may include an antenna panel ID or an antenna panel index.

In some embodiments, the CORESET group information may include a control resource set pool index (coresetPoolIndex).

In some embodiments, the beam information may include a beam ID or a beam index.

In the embodiments of the present application, the beam may also be referred to as a spatial domain filter, or a spatial reception parameter (spatial Rx parameter).

In some embodiments, the PUSCH being associated with the reference signal set information may refer to:
a reference signal set associated with the antenna panel used to transmit PUSCH.

In some embodiments, the PUSCH being associated with the TCI state information may refer to:
a transmit beam of the PUSCH being determined according to the TCI state information.

In some embodiments, the PUSCH being associated with the antenna panel information may refer to:
the PUSCH being transmitted through a antenna panel indicated by the antenna panel information.

In some embodiments, the PUSCH being associated with the control resource set group information may refer to:
a CORESET group indicated by the control resource set group information being a CORESET group configured by high layer signaling for resources for transmitting the PUSCH.

In some embodiments, the uplink information being associated with the beam information may include:
the PUSCH being transmitted via a beam indicated by the beam information.

In some embodiments, the scheduling-free PUSCHs being associated with different spatial parameters may refer to:
the scheduling-free PUSCHs being associated with a plurality of spatial parameters. Each scheduling-free PUSCH is associated with one spatial parameter, and different scheduling-free PUSCHs are associated with different spatial parameters. For example, the scheduling-free PUSCHs include a first PUSCH and a second PUSCH. The first PUSCH is associated with a first spatial parameter, the second PUSCH is associated with a second spatial parameter, and the first spatial parameter and the second spatial parameter are different.

In some embodiments, the first spatial parameter includes at least one of:
a first reference signal set, a first TCI state, a first antenna panel (e.g. panel1), a first CORESET group, or a first beam.

In some embodiments, the second spatial parameter includes at least one of:
a second reference signal set, a second TCI state, a second antenna panel (e.g., panel2), a second CORESET group, or a second beam.

Embodiment 1: the scheduling-free PUSCHs are configured via a same high-layer parameter.

For example, transmission parameters of the scheduling-free PUSCHs may be configured via a same high-level parameter. Specifically, for example, the transmission parameters of the scheduling-free PUSCHs may be carried in one information element (IE).

For another example, the spatial parameters of the scheduling-free PUSCHs may be configured via a same high-level parameter. Specifically, for example, the spatial parameters of the scheduling-free PUSCHs may be carried in one IE.

For yet another example, the transmission parameters and the spatial parameters of the scheduling-free PUSCHs may be configured via a same high-level parameter. Specifically, for example, the transmission parameters and the spatial parameters of the scheduling-free PUSCHs may be carried in one IE.

Optionally, the transmission parameter of the scheduling-free PUSCH includes but is not limited to at least one of:
time domain offset of the PUSCH, time domain allocation information of the PUSCH, frequency domain allocation information of the PUSCH, a antenna port of the PUSCH, precoding information of the PUSCH or the number of layers of the PUSCH.

In some embodiments, the scheduling-free PUSCHs are associated with different SRS resource set indices (SRS-ResourceSetId).

For example, the scheduling-free PUSCHs include n scheduling-free PUSCHs. SRS resource set indices associated with the n scheduling-free PUSCHs are index 0, index 1, ... , index n-1, which may also be recorded as a first SRS resource set, ... , an n-th SRS resource set.

In some embodiments, the scheduling-free PUSCHs overlap in a time domain.

For example, the scheduling-free PUSCHs include two scheduling-free PUSCHs, which are recorded as a first PUSCH and a second PUSCH. In this case, the scheduling-free PUSCHs overlapping in the time domain may include time domain resources of the first PUSCH overlapping time domain resources of the second PUSCH. For example, time domain symbols occupied by the first PUSCH overlapping time domain symbols occupied by the second PUSCH.

In some embodiments, the time domain resources of the first PUSCH are configured via first time domain resource configuration information (timeDomainAllocation), and the time domain resources of the second PUSCH are configured via second time domain resource configuration information (timeDomainAllocation2).

Time domain resources configured via the first time domain resource configuration information overlap time domain resources configured via the second time domain resource configuration information. For example, time domain symbols configured via the first time domain resource configuration information overlap time domain symbols configured via the second time domain resource configuration information.

In some embodiments, the frequency domain resources of the first PUSCH are configured via first frequency domain resource configuration information (frequencyDomainAllocation), and the frequency domain resources of the second PUSCH are configured via second frequency domain resource configuration information (frequencyDomainAllocation2).

In some embodiments, pieces of precoding information and numbers of layers of the scheduling-free PUSCHs are configured separately.

For example, the scheduling-free PUSCHs include the first PUSCH and the second PUSCH. Precoding information and the number of layers of the first PUSCH are configured via first precoding and number of layers configuration information (precodingAndNumberOfLayers), and precoding information and the number of layers of the second PUSCH are configured via second precoding and number of layers configuration information (precodingAndNumberOfLayers2).

In some embodiments, precoding and number of layers information of the first PUSCH is associated with a first SRS resource set, and precoding and number of layers information of the second PUSCH is associated with a second SRS resource set.

Optionally, a sum of numbers of transmission layers configured by the first precoding and number of layers configuration information and the second precoding and number of layers configuration information does not exceed 4. Alternatively, the numbers of transmission layers configured by the first precoding and number of layers configuration information and the second precoding and number of layers configuration information do not exceed 2.

In some embodiments, SRS resource indicators (srs-ResourceIndicator) of the scheduling-free PUSCHs are configured separately.

For example, the scheduling-free PUSCHs include the first PUSCH and the second PUSCH, an SRS resource corresponding to the first PUSCH is configured via a first SRS resource indicator, and an SRS resource corresponding to the second PUSCH is configured via a second SRS resource indicator.

The first SRS resource indicator is used to indicate the first SRS resource, and the second SRS resource indicator is used to indicate the second SRS resource. The first SRS resource indicated by the first SRS resource indicator belongs to a first SRS resource set, and the second SRS resource indicated by the second SRS resource indicator belongs to a second SRS resource set.

In some embodiments, a phase-tracking reference signals (PTRS) port index (e.g., ptrs-PortIndex) associated with the first SRS resource is different from a PTRS port index (e.g., ptrs-PortIndex2) associated with the second SRS resource. In some embodiments, the scheduling-free PUSCHs include at least one codebook-based PUSCH and/or at least one non-codebook-based PUSCH. That is, the scheduling-free PUSCHs may all be codebook-based PUSCHs, may all be non-codebook-based PUSCHs, or may partly be codebook-based PUSCHs and partly be non-codebook-based PUSCHs.

Optionally, in a case where the scheduling-free PUSCHs include a non-codebook-based PUSCH (such as the first PUSCH), PTRS ports associated with one or more SRS resources corresponding to the first PUSCH are the same, that is, correspond to the same ptrs-PortIndex.

In some embodiments, the scheduling-free PUSCHs are associated with corresponding PTRSs, such as a first PTRS and a second PTRS. A port of first DMRS associated with a port of the first PTRS is determined according to a predefined rule. A port of a second DMRS associated with a port of the second PTRS is determined according to a predefined rule.

In some implementations, the predefined rule is to apply an association relationship between PTRS and DMRS corresponding to a preset state in a PTRS-DMRS association information field in DCI. The preset state may be any state. For example, the port of the first DMRS associated with the port of the first PTRS is determined according to state '0' or state '00' in the PTRS-DMRS association information field. For example, the port of the second DMRS associated with the port of the second PTRS is determined according to state '1', state '01' or state '11' in the PTRS-DMRS association information field. Optionally, the correspondence between the state value of the PTRS-DMRS association information field and the DMRS port associated with the PTRS port may be as shown in Table 1 or Table 2.

In some other implementations, the predefined rule is to apply a default DMRS port. For example, the first DMRS port associated with the first PTRS port is a first DMRS port associated with PTRS port 0. Alternatively, the first DMRS port associated with the first PTRS port is the first DMRS port associated with PTRS port 0 and a first DMRS port associated with PTRS port 1. For example, the second DMRS port associated with the second PTRS port is a second DMRS port associated with PTRS port 0. Alternatively, the second DMRS port associated with the second PTRS port is the second DMRS port associated with PTRS port 0 and a second DMRS port associated with PTRS port 1.

Optionally, the port of the first DMRS is different from the port of the second DMRS.

**Table 1**

| state | DMRS port associated with PTRS port 0 |
|---|---|
| 0 | A first scheduled DMRS port |
| 1 | A second scheduled DMRS port |
| 2 | A third scheduled DMRS port |
| 3 | A fourth scheduled DMRS port |

**Table 2**

| States of a higher-order bit | DMRS Port associated with PTRS Port 0 | States of a lower-order bit | DMRS Port associated with PTRS Port 2 |
|---|---|---|---|
| 0 | PTRS port 0 corresponding to the first DMRS port | 0 | PTRS port 1 corresponding to the first DMRS port |
| 1 | PTRS port 0 corresponding to the second DMRS port | 1 | PTRS port 1 corresponding to the second DMRS port |

In some embodiments, maximum numbers of transmission layers corresponding to the scheduling-free PUSCHs are configured separately. In this case, the maximum numbers of transmission layers corresponding to the scheduling-free PUSCHs may be the same or different.

In some other embodiments, the maximum numbers of transmission layers corresponding to the scheduling-free PUSCHs is configured via a same high-level parameter.

In this case, the maximum numbers of transmission layers corresponding to the scheduling-free PUSCHs may be the same.

Therefore, in a case where the scheduling-free PUSCHs are all scheduling-free PUSCHs of type 1, a method for configuring the transmission parameters of the PUSCHs is provided in the embodiments of the present application. For example, independent precoding information and number of layers are used, independent configuration of maximum number of transmission layers or the same configuration of maximum number of transmission layers are used.

In some embodiments, the scheduling-free PUSCHs include a first PUSCH and a second PUSCH, the first PUSCH is associated with a first SRS resource set, the second PUSCH is associated with a second SRS resource set, the first SRS resource set is associated with a first control resource set, the second SRS resource set is associated with a second control resource set, and an index of the first control resource set is different from an index of the second control resource set.

In some embodiments, the index of the first control resource set and the index of the second control resource set are predefined, or configured by a network device.

For example, if the first control resource set index and the second control resource set index may be predefined, the first SRS resource set is associated with the control resource set with an index of 0, and the second SRS resource set is associated with the control resource set with an index of 1.

For another example, if the index of the first control resource set and the index of the second control resource set are configured by a network device, the index of the control resource set associated with the SRS resource set may be configured in configuration information of the SRS resource set. Alternatively, both the index of the control resource set and the associated SRS resource set index may be configured in configured uplink grant (ConfiguredUplinkGrant).

A design of an RRC structure for carrying the transmission parameters and spatial parameters of the scheduling-free PUSCHs will be described below with reference to specific examples.

### Example 1:

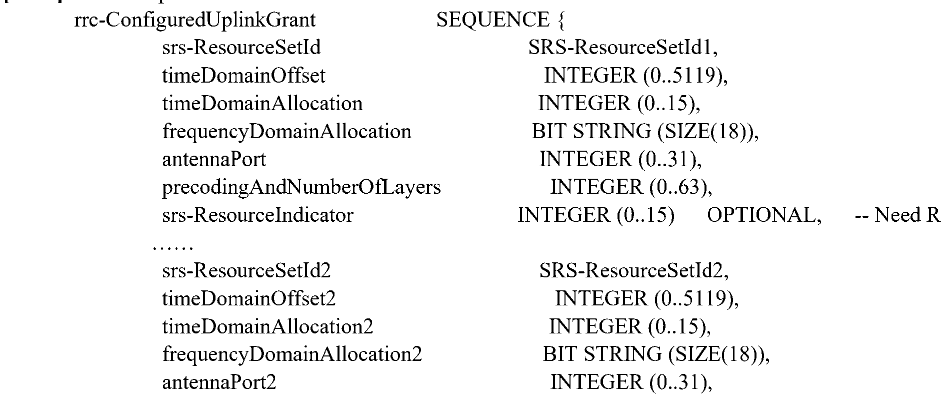

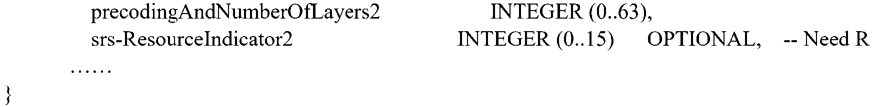

Among them, srs-ResourceSetId is used to configure the SRS resource set of the first PUSCH, and srs-ResourceSetId2 is used to configure the SRS resource set of the second PUSCH; timeDomainOffset is used for time domain offset of the first PUSCH, and timeDomainOffset2 is used to configure time domain offset of the second PUSCH; timeDomainAllocation is used to configure time domain allocation of the first PUSCH, and timeDomainAllocation2 is used to configure time domain allocation of the second PUSCH; frequencyDomainAllocation is used to configure frequency domain allocation of the first PUSCH, and frequencyDomainAllocation2 is used to configure frequency domain allocation of the second PUSCH; antennaPort is used to configure an antenna port of the first PUSCH, antennaPort2 is used to configure an antenna port of the second PUSCH; precodingAndNumberOfLayers is used to configure precoding information and number of layers of the first PUSCH, precodingAndNumberOfLayers2 is used to configure precoding information and number of layers of the second PUSCH; srs-ResourceIndicator is used to configure an SRS resource corresponding to the first PUSCH, and srs-ResourceIndicator2 is used to configure an SRS resource corresponding to the second PUSCH.

### Example 2:

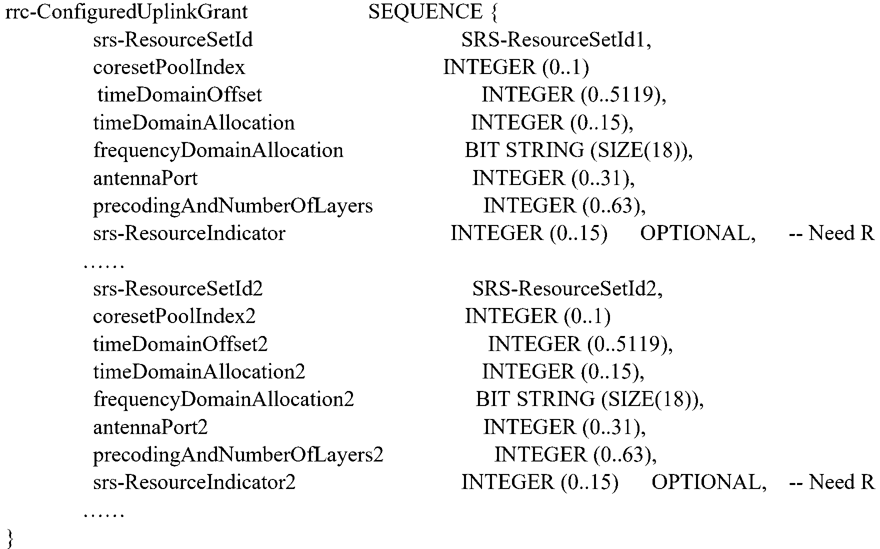

Among them, srs-ResourceSetId is used to configure the SRS resource set of the first PUSCH, and srs-ResourceSetId2 is used to configure the SRS resource set of the second PUSCH; coresetPoolIndexl is used to configure a control resource set group of the first PUSCH, and coresetPoolIndex2 is used to configure a control resource set group of the second PUSCH; timeDomainOffset is used for the time domain offset of the first PUSCH, and timeDomainOffset2 is used to configure the time domain offset of the second PUSCH; timeDomainAllocation is used to configure the time domain allocation of the first PUSCH, and timeDomainAllocation2 is used to configure the time domain allocation of the second PUSCH; frequencyDomainAllocation is used to configure the frequency domain allocation of the first PUSCH, and frequencyDomainAllocation2 is used to configure the frequency domain allocation of the second PUSCH; antennaPort is used to configure the antenna port of the first PUSCH, antennaPort2 is used to configure the antenna port of the second PUSCH; precodingAndNumberOfLayers is used to configure the precoding information and number of layers of the first PUSCH, precodingAndNumberOfLayers2 is used to configure the precoding information and number of layers of the second PUSCH; srs-ResourceIndicator is used to configure the SRS resource corresponding to the first PUSCH, and srs-ResourceIndicator2 is used to configure the SRS resource corresponding to the second PUSCH.

### Example 3:

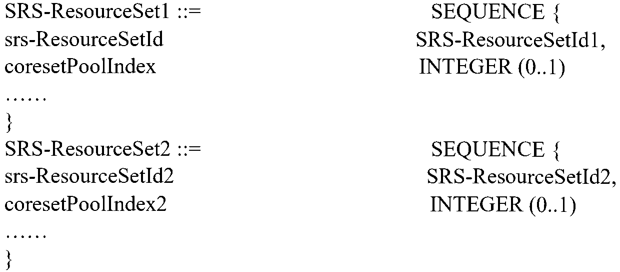

Among them, srs-ResourceSetId is used to configure the SRS resource set of the first PUSCH, and srs-ResourceSetId2 is used to configure the SRS resource set of the second PUSCH; coresetPoolIndexl is used to configure a control resource set group associated with the SRS resource set of the first PUSCH, and coresetPoolIndex2 is used to configure the control resource set group associated with the SRS resource set of the second PUSCH.

It should be noted that in the above examples, Example 1 and Example 3 may be used in combination. That is, the terminal device may obtain the transmission parameters and spatial parameters corresponding to the first PUSCH and the second PUSCH according to the parameters in Example 1 and Example 3. Example 2 may be used alone. That is, the terminal device may obtain the transmission parameters and spatial parameters corresponding to the first PUSCH and the second PUSCH according to the parameters in Example 2.

Therefore, in a case where the scheduling-free PUSCHs are all the scheduling-free PUSCHs of type 1, a method for configuring the spatial parameters of the PUSCHs is provided in the embodiments of the present application. Moreover, the spatial parameters of the PUSCHs and the transmission parameters of the PUSCHs may be associated, or may be configured separately, thereby improving flexibility of the configuration.

Embodiment 2: the scheduling-free PUSCHs are configured via different high-layer parameters.

For example, the scheduling-free PUSCHs include a first PUSCH and a second PUSCH, the transmission parameter and spatial parameter of the first PUSCH are configured by a first high-level parameter, and the transmission parameter and a high-level parameter of the second PUSCH are configured by a second high-level parameter.

Optionally, in a case where the scheduling-free PUSCHs are respectively configured by high-level parameters, the scheduling-free PUSCHs configured by the high-level parameters may have characteristics described in Embodiment 1.

For example, the scheduling-free PUSCHs are associated with different SRS resource set indices.

For another example, the scheduling-free PUSCHs overlap in the time domain.

For yet another example, pieces of precoding information and numbers of layers of the scheduling-free PUSCHs are configured separately.

For yet another example, SRS resource indicators of the scheduling-free PUSCHs are configured separately.

For yet another example, the scheduling-free PUSCHs may include at least one codebook-based PUSCH and/or at least one non-codebook-based PUSCH.

For yet another example, maximum numbers of transmission layers corresponding to the scheduling-free PUSCHs may be configured separately, or may be configured via a same high-level parameter.

A design of an RRC structure for carrying the transmission parameters and spatial parameters of the scheduling-free PUSCHs will be described below with reference to specific examples.

### Example 4:

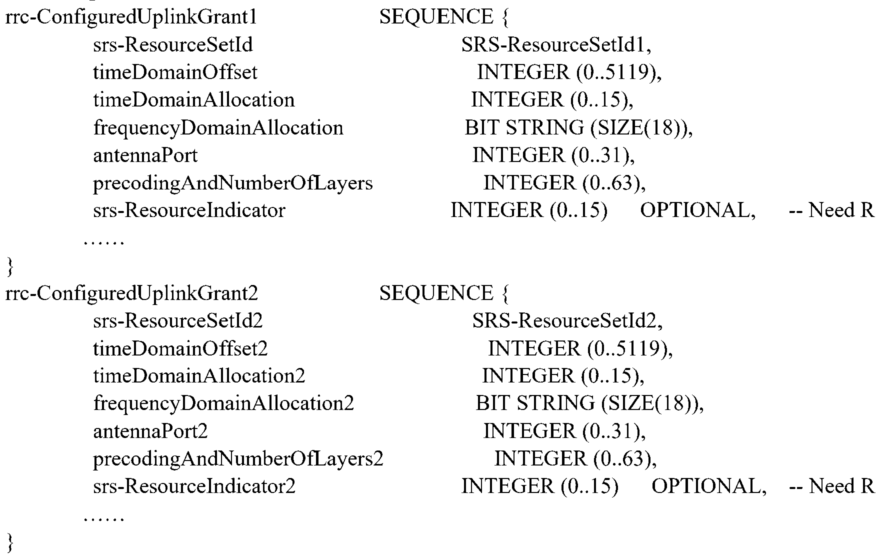

The scheduling-free PUSCHs include a first PUSCH and a second PUSCH. rrc-ConfiguredUplinkGrant1 is used to configure the transmission parameter and spatial parameter of the first PUSCH, and rrc-ConfiguredUplinkGrant2 is used to configure the transmission parameter and spatial parameter of the second PUSCH. Functions of the parameters included in rrc-ConfiguredUplinkGrantl refer to the relevant description in Example 1, which will not be repeated here for brevity. Functions of the parameters included in rrc-ConfiguredUplinkGrant2 refer to the relevant description in Example 1, which will not be repeated here for brevity.

### Example 5:

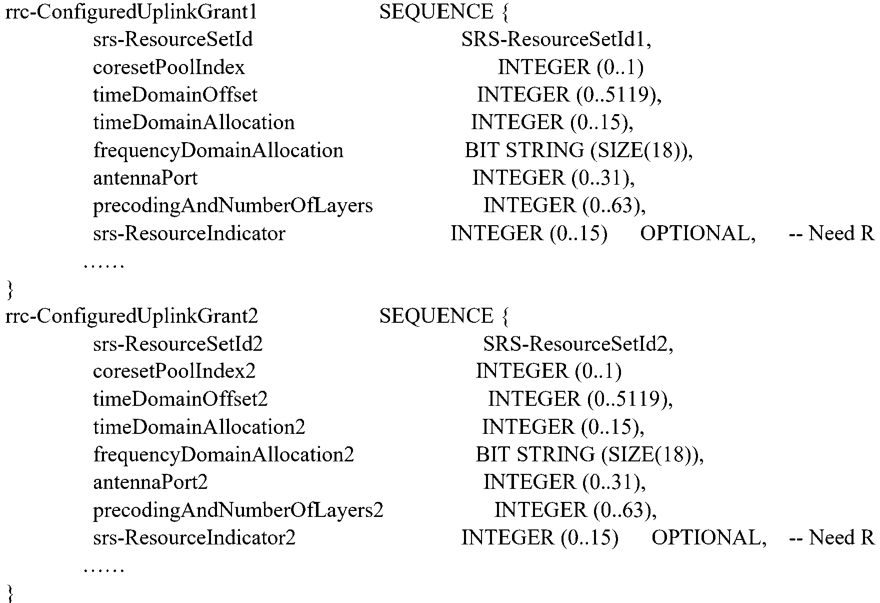

The scheduling-free PUSCHs include a first PUSCH and a second PUSCH. rrc-ConfiguredUplinkGrant1 is used to configure the transmission parameter and spatial parameter of the first PUSCH, and rrc-ConfiguredUplinkGrant2 is used to configure the transmission parameter and spatial parameter of the second PUSCH. Functions of the parameters included in rrc-ConfiguredUplinkGrantl refer to the relevant description in Example 2, which will not be repeated here for brevity. Functions of the parameters included in rrc-ConfiguredUplinkGrant2 refer to the relevant description in Example 2, which will not be repeated here for brevity.

### Example 6:

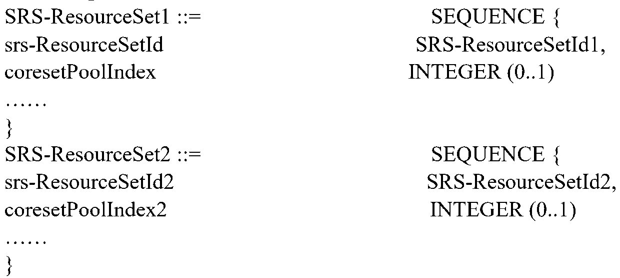

Among them, srs-ResourceSetId is used to configure the SRS resource set of the first PUSCH, and srs-ResourceSetId2 is used to configure the SRS resource set of the second PUSCH; coresetPoolIndexl is used to configure a control resource set group associated with the SRS resource set of the first PUSCH, and coresetPoolIndex2 is used to configure a control resource set group associated with the SRS resource set of the second PUSCH.

It should be noted that in the above examples, Example 4 and Example 6 may be used in combination. That is, the terminal device may obtain the transmission parameters and spatial parameters corresponding to the first PUSCH and the second PUSCH according to the parameters in Example 4 and Example 6. Example 5 may be used alone. That is, the terminal device obtains the transmission parameters and spatial parameters corresponding to the first PUSCH and the second PUSCH according to the parameters in Example 5.

Therefore, in a case where the scheduling-free PUSCHs are all the scheduling-free PUSCHs of type 1, a method for configuring the spatial parameters of the PUSCHs is provided in the embodiments of the present application. Moreover, the spatial parameters of the PUSCHs and the transmission parameters of the PUSCHs may be associated, or may be configured independently, thereby improving flexibility of the configuration.

In some embodiments of the present application, in a case where the terminal device has configuration information of the scheduling-free PUSCHs (i.e., the terminal device has scheduling-free configuration information), the method 200 further includes:
determining to transmit one scheduling-free PUSCH according to first indication information of the network device, or switching to transmitting one scheduling-free PUSCH; or
in a case where a preset condition is met, determining to transmit one scheduling-free PUSCH, or switching to transmitting one scheduling-free PUSCH.

The one scheduling-free PUSCH is associated with a first spatial parameter or a second spatial parameter. That is, the one scheduling-free PUSCH may be the first PUSCH, or may be the second PUSCH.

In some embodiments, the terminal device has configuration information of the scheduling-free PUSCHs, which may include:
the terminal device receiving configuration information of the scheduling-free PUSCHs configured by the network device. That is, the pieces of configuration information of the scheduling-free PUSCHs may be configured by the network device. For example, the pieces of configuration information may be configured by the network device via an RRC parameter, and the RRC parameter may be, for example, a configured grant configuration (ConfiguredGrantConfig) or an RRC configured uplink grant (rrc-ConfiguredUplinkGrant).

In some embodiments, the scheduling-free configuration information is used to configure transmission of the scheduling-free PUSCHs, and the scheduling-free configuration information is associated with different spatial parameters. That is, the scheduling-free PUSCHs are associated with different spatial parameters. In other words, the terminal device needs to transmit the scheduling-free PUSCHs via different spatial parameters. The scheduling-free configuration information is a semi-static configuration. The terminal device may transmit the scheduling-free PUSCHs based on the scheduling-free configuration information within a period of time. In a case where the terminal device receives the first indication information from the network device, or the terminal device determines that a preset conditions are met, the terminal device may switch to transmitting one scheduling-free PUSCH. For example, based on one of the pieces of scheduling-free configuration information, a corresponding scheduling-free PUSCH is transmitted.

It should be noted that the terminal device switches to transmitting only one scheduling-free PUSCH with respect to last transmission of the terminal device. If the last transmission of the terminal device is transmission of the scheduling-free PUSCHs based on the scheduling-free configuration information, the terminal device may switch to transmitting only one scheduling-free PUSCH in a case of receiving the first indication information or determining that the preset condition is met. If the last transmission of the terminal device was also one scheduling-free PUSCH transmission, the terminal device may not perform the switch.

Therefore, in the embodiments of the present application, in a case where the terminal device needs to transmit the scheduling-free PUSCHs, the terminal device may transmit only one scheduling-free PUSCH according to the indication of the network device or on its own determination, or may drop transmission of some scheduling-free PUSCHs.

In some embodiments, in a case where the terminal device has configuration information of the scheduling-free PUSCHs of type 1, the terminal device switches to transmitting one scheduling-free PUSCH according to the first indication information of the network device, or switches to transmitting one scheduling-free PUSCH in a case where a preset condition is met.

For example, the terminal device is configured with pieces of scheduling-free configuration information, and the pieces of scheduling-free configuration information are used to configure the transmission of the scheduling-free PUSCHs of type 1. The pieces of scheduling-free configuration information are associated with different spatial parameters. That is, the scheduling-free PUSCHs of type 1 are associated with different spatial parameters. Within a period of time, the terminal device transmits the scheduling-free PUSCHs of type 1 based on the pieces of scheduling-free configuration information. In a case where the terminal device receives the first indication information of the network device, or the terminal device determines that the preset condition is met, the terminal device may switch to transmitting one scheduling-free PUSCH. For example, based on one of the pieces of scheduling-free configuration information, a corresponding scheduling-free PUSCH of type 1 is transmitted.

The network device determines whether the plurality of spatial parameters may be used to transmit the plurality of scheduling-free PUSCHs. In this way, the network device may determine that the terminal device uses the plurality of spatial parameters to transmit the plurality of scheduling-free PUSCHs or uses a single spatial parameter to transmit one scheduling-free PUSCH according to the system performance. The terminal device only needs to perform transmission according to the indication of the network device, which is conducive to reducing implementation complexity of the terminal device.

In some embodiments, the first indication information is carried in downlink signaling, and the downlink signaling may be DCI or MAC CE, etc.

It should be understood that the specific indication manner of the first indication information is not limited in the present application. For example, the first indication information may be used to indicate a PUSCH for which a transmission needs to be dropped, or a PUSCH for which a transmission does not need to be dropped, or a transmission state corresponding to each PUSCH in the scheduling-free PUSCHs (such as a transmission needs to be dropped or a transmission needs to continue).

In some specific embodiments, n states of the first indication information correspond to n scheduling-free PUSCH transmissions. Each state is used to indicate that a corresponding PUSCH transmission is a PUSCH transmission that needs to be dropped, where n is a positive integer greater than 1.

For example, the scheduling-free PUSCHs are the first PUSCH and the second PUSCH. The first indication information may be 1 bit, used to indicate two states, i.e., 0 and 1. The two states are respectively used to indicate that a transmission of the first PUSCH needs to be dropped and a transmission of the second PUSCH needs to be dropped. For example, state 0 is used to indicate that the transmission of the first PUSCH needs to be dropped, and state 1 is used to indicate that the transmission of the second PUSCH needs to be dropped.

For another example, the scheduling-free PUSCHs are a first PUSCH, a second PUSCH, a third PUSCH and a fourth PUSCH. The first indication information may be 2 bits, used to indicate 4 states, i.e., 00, 01, 10 and 11. The four states are used to indicate that a transmission of the first PUSCH needs to be dropped, a transmission of the second PUSCH needs to be dropped, a transmission of the third PUSCH needs to be dropped and a transmission of the fourth PUSCH needs to be dropped. For example, state 00 is used to indicate that the transmission of the first PUSCH needs to be dropped, state 01 is used to indicate that the transmission of the second PUSCH needs to be dropped, state 10 is used to indicate that the transmission of the third PUSCH needs to be dropped, and state 11 is used to indicate that the transmission of the fourth PUSCH needs to be dropped.

In some embodiments, the first indication information indicates, via bitmap, a transmission of a PUSCH of the scheduling-free PUSCHs that needs to be dropped, or a transmission of a PUSCH that does not need to be dropped, or a transmission of a PUSCH that needs to continue.

For example, the scheduling-free PUSCHs include a first PUSCH and a second PUSCH, and the first indication information may be 2 bits (B1B0), the first bit (B0) is used to indicate whether the first PUSCH needs to be dropped, and the second bit (B1) is used to indicate whether the second PUSCH needs to be dropped. As an example, B0 being set to 1 indicates that the first PUSCH needs to be dropped, and B0 being set to 0 indicates that the first PUSCH does not need to be dropped or needs to be continuously transmitted. B1 being set to 1 indicate that the second PUSCH needs to be dropped, and B1 being set to 0 indicates that the second PUSCH does not need to be dropped, or needs to be continuously transmitted.

For another example, the scheduling-free PUSCHs include a first PUSCH, a second PUSCH, a third PUSCH and a fourth PUSCH. The first indication information may be 4 bits (B3 to B0). B0 is used to indicate whether the first PUSCH needs to be dropped, B1 is used to indicate whether the second PUSCH needs to be dropped, B2 is used to indicate whether the third PUSCH needs to be dropped, and B3 is used to indicate whether the fourth PUSCH needs to be dropped. As an example, B0 being set to 1 indicates that the first PUSCH needs to be dropped, and B0 being set to 0 indicates that the first PUSCH does not need to be dropped, or needs to be continuously transmitted. B1 being set to 1 indicates that the second PUSCH needs to be dropped, and B1 being set to 0 indicates that the second PUSCH does not need to be dropped, or needs to be continuously transmitted. B2 being set to 1 indicates that the third PUSCH needs to be dropped, and B2 being set to 0 indicates that the third PUSCH does not need to be dropped, or needs to be continuously transmitted. B3 being set to 1 indicates that the fourth PUSCH needs to be dropped, and B3 being set to 0 indicates that the fourth PUSCH does not need to be dropped, or needs to be continuously transmitted.

In some embodiments of the present application, the method 200 further includes:
determining whether the preset condition is met according to first information. The first information includes but is not limited to at least one of:
powers of the scheduling-free PUSCHs;
timing advances of the scheduling-free PUSCHs;
a length of time over which the scheduling-free PUSCHs overlap in the time domain;
interference between the scheduling-free PUSCHs; or
signal qualities of the scheduling-free PUSCHs.

The terminal device determines whether to transmit the scheduling-free PUSCHs using the plurality of spatial parameters, which is beneficial to reducing signaling overhead of the network device. In addition, the terminal device determines whether to transmit the scheduling-free PUSCHs using the plurality of spatial parameters according to the first information, which is beneficial to ensuring transmission performance of the PUSCH.

In some embodiments, the preset condition includes but is not limited to at least one of:
a difference between the powers of the scheduling-free PUSCHs being greater than or equal to a first threshold;
a difference between the timing advances of the scheduling-free PUSCHs being greater than or equal to a second threshold;
a number of symbols over which the scheduling-free PUSCHs overlap in the time domain being greater than or equal to a third threshold;
a difference or ratio between a strength of the first PUSCH of the scheduling-free PUSCHs and a strength of interference of the second PUSCH of the scheduling-free PUSCHs to the first PUSCH being less than or equal to a fourth threshold;
a difference or ratio between a strength of the second PUSCH of the scheduling-free PUSCHs and a strength of interference of the first PUSCH of the scheduling-free PUSCHs to the second PUSCH being less than or equal to a fifth threshold;
the interference between the scheduling-free PUSCHs being greater than or equal to a sixth threshold; or
a difference or ratio between the signal qualities of the scheduling-free PUSCHs being greater than or equal to a seventh threshold.

The power of PUSCH may reflect interference of a transmission of the PUSCH on transmissions of other PUSCHs. In a case where a difference or ratio between PUSCH powers of two PUSCHs is large, it indicates that a transmission of a PUSCH with large power has great interference on a transmission of a PUSCH with small power. In this case, it is switched to transmitting only one scheduling-free PUSCH. For example, only the PUSCH with the large power, or only the PUSCH with the small power may be transmitted, which is beneficial to improving transmission performance.

For example, a power of the first PUSCH is P11 and a power of the second PUSCH is P22. In a case where an absolute value of a difference between P11 and P22 is greater than or equal to the first threshold, or a ratio of P11 to P22 is greater than or equal to the first threshold, or the ratio of P22 to P11 is greater than or equal to the first threshold, the terminal device may switch to transmitting only one scheduling-free PUSCH, for example, only the first PUSCH or only the second PUSCH.

In some embodiments, the first threshold is predefined, or configured by the network device.

The difference between the timing advances (TAs) of the PUSCHs may reflect timing synchronization between the PUSCH transmissions. In a case where the difference is large, for example, the difference exceeds a length of a cyclic prefix (CP), performance loss may occur. In this case, the terminal device may switch to transmitting only one scheduling-free PUSCH, for example, only a PUSCH with a large timer advance, or only a PUSCH with a small timing advance, which is beneficial to improving transmission performance.

For example, a TA of the first PUSCH is TA1 and a TA of the second PUSCH is TA2. In a case where a difference between TA1 and TA2 exceeds the second threshold or a difference between TA2 and TA1 exceeds the second threshold, the terminal device switches to transmitting only one scheduling-free PUSCH, for example, only the first PUSCH or only the second PUSCH.

In some embodiments, the second threshold is predefined, or configured by the network device.

The length of time over which the PUSCHs overlap in the time domain may refer to, for example, the number of overlapping symbols. The longer the time over which the PUSCHs overlap in the time domain, the greater the interference between each other. In a case where the length of time over which the PUSCHs overlap is long, the terminal device switches to transmitting only one scheduling-free PUSCH, such as only the first PUSCH or only the second PUSCH, which is beneficial to improving the transmission performance.

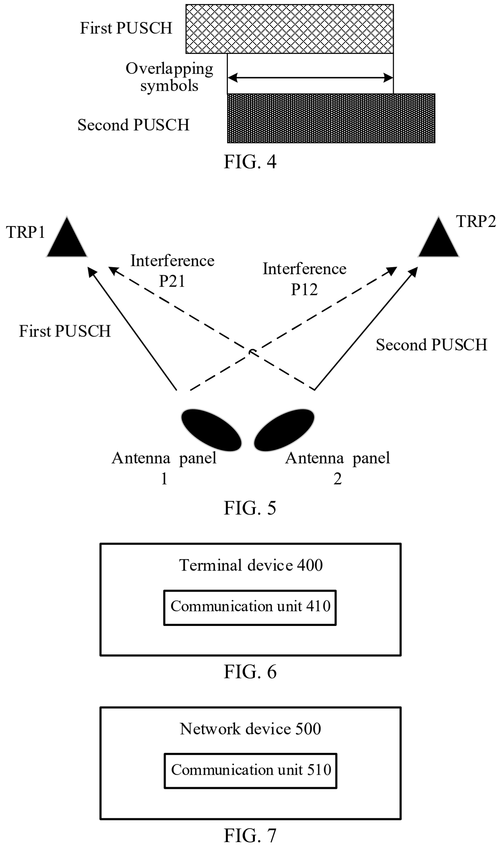

For example, as shown in FIG. 4, in a case where the number of symbols over which the first PUSCH and the second PUSCH overlap is larger than the third threshold, it is switched to transmitting only one PUSCH, for example, only the first PUSCH or only the second PUSCH.

In some embodiments, the third threshold is predefined or configured by the network device.

In a case where the interference between the scheduling-free PUSCHs is large, the terminal device may switch to transmitting only one PUSCH, for example, only the first PUSCH or only the second PUSCH, which is beneficial to improving the transmission performance.

The great interference between PUSCHs may refer to great interference intensity caused by a transmission of one PUSCH to a transmission of another PUSCH, or may also refer to great intensity of the interference with respect to the intensity of the PUSCH transmission. For example, a difference between the intensity of the interference and the intensity of the PUSCH is great, or a ratio of the intensity of the interference to the intensity of the PUSCH is great.

In some embodiments, interference of the first PUSCH to the second PUSCH is determined according to an SRS corresponding to the first PUSCH, or according to a signal quality and beam gain of the first PUSCH.

In some embodiments, interference of the second PUSCH to the first PUSCH is determined according to an SRS corresponding to the second PUSCH, or according to a signal quality and beam gain of the second PUSCH.

In some embodiments, the signal quality of the PUSCH may include but is not limited to at least one of:
reference signal receiving power (RSRP), reference signal receiving quality (RSRQ), signal to interference plus noise ratio (SINR), or received signal strength indication (RSSI).

For example, as shown in FIG. 5, a power of the first PUSCH is P11, a power of the second PUSCH is P22. Interference of the first PUSCH to the second PUSCH is P12, and interference of the second PUSCH to the first PUSCH is P21. The terminal device may switch to transmitting only one PUSCH, for example, only the first PUSCH or only the second PUSCH, in a case where P12 is greater than the sixth threshold, or P21 is greater than the sixth threshold, or P22 divided by P12 (or P22 minus P12) is less than or equal to the fifth threshold, or P11 divided by P21 (or P11 minus P21) is less than or equal to the fourth threshold.

In some embodiments, the fourth threshold is predefined, or configured by the network device.

In some embodiments, the fifth threshold is predefined, or configured by the network device.

In some embodiments, the sixth threshold is predefined, or configured by the network device.

The signal quality of PUSCH may also reflect a degree of interference of a transmission of the PUSCH to transmissions of other PUSCHs. A large difference between signal qualities of two PUSCHs indicates that interference of the transmission of one PUSCH to the transmission of another PUSCH is large. Therefore, in a case where a difference or ratio of signal qualities of the two PUSCHs is large, it is switched to transmitting only one PUSCH, such as only the first PUSCH or only the second PUSCH, which is beneficial to improving the transmission performance.

For example, in a case where the difference or ratio between the signal quality of the first PUSCH and the signal quality of the second PUSCH is greater than or equal to the seventh threshold, or the difference or ratio between the signal quality of the second PUSCH and the signal quality of the first PUSCH is greater than or equal to the seventh threshold, it is switched to transmitting only the first PUSCH or only transmitting the second PUSCH, which is beneficial to improving the transmission performance.

In some embodiments, the seventh threshold is predefined, or configured by the network device.

In summary, in the embodiments of the present application, the terminal device may transmit one or more scheduling-free PUSCHs to the network device. The terminal device may use different spatial parameters to transmit the scheduling-free PUSCHs.

Furthermore, in a case where the terminal device transmits the scheduling-free PUSCHs, the PUSCHs may be configured via a same high-level parameter, or may be configured via different high-level parameters.

For example, the transmission parameters and spatial parameters of the PUSCHs may be configured via a same high-level parameter.

For another example, the transmission parameters and spatial parameters of the PUSCHs may be configured via different high-level parameters.

Furthermore, in a case where the terminal device transmits the scheduling-free PUSCHs, the terminal device may also switch to transmitting only one scheduling-free PUSCH according to the indication of the network device or in a case where a preset condition is met, which is beneficial to ensuring transmission performance of the PUSCH.

The method embodiments of the present application have been described in detail above with reference to FIGS. 3 to 5. The device embodiments of the present application will be described in detail below with reference to FIGS. 6 to 10. It should be understood that the device embodiments and the method embodiments correspond to each other, and similar description can refer to the method embodiment.

FIG. 6 shows a schematic block diagram of a terminal device 400 according to the embodiments of the present application. As shown in FIG. 6, the terminal device 400 includes:
a communication unit 410, used to transmit one or more scheduling-free physical uplink shared channels (PUSCHs). The scheduling-free PUSCHs are associated with different spatial parameters.

In some embodiments, the spatial parameter includes at least one of:
reference signal set information, transmission configuration indicator (TCI) state information, antenna panel information, control resource set group information, or beam information.

In some embodiments, the scheduling-free PUSCHs are configured via a same high-level parameter, or the scheduling-free PUSCHs are configured via different high-level parameters.

In some embodiments, the scheduling-free PUSCHs are associated with different sounding reference signal (SRS) resource set indices.

In some embodiments, the scheduling-free PUSCHs include a first PUSCH and a second PUSCH, the first PUSCH is associated with a first SRS resource set, the second PUSCH is associated with a second SRS resource set, the first SRS resource set is associated with a first control resource set, the second SRS resource set is associated with a second control resource set, and an index of the first control resource set is different from an index of the second control resource set.

In some embodiments, the index of the first control resource set and the index of the second control resource set are predefined, or configured by a network device.

In some embodiments, the scheduling-free PUSCHs overlap in a time domain.

In some embodiments, pieces of precoding information and numbers of layers of the scheduling-free PUSCHs are configured separately.

In some embodiments, SRS resource indicators of the scheduling-free PUSCHs are configured separately.

In some embodiments, the scheduling-free PUSCHs include at least one codebook-based PUSCH and/or at least one non-codebook-based PUSCH.

In some embodiments, maximum numbers of transmission layers corresponding to the scheduling-free PUSCHs are configured separately, or configured via a same high-level parameter.

In some embodiments, in a case where the terminal device has configuration information of the scheduling-free PUSCHs, the terminal device further includes:
a processing unit, used to determine to transmit one scheduling-free PUSCH according to first indication information of the network device; or
determining to transmit one scheduling-free PUSCH in a case where a preset condition is met, wherein
the one scheduling-free PUSCH is associated with a first spatial parameter or a second spatial parameter, and the spatial parameters associated with the scheduling-free PUSCHs include the first spatial parameter and the second spatial parameter.

In some embodiments, the first indication information is carried in downlink control information (DCI) or a media access control control element (MAC CE).

In some embodiments, n states of the first indication information correspond to n scheduling-free PUSCH transmissions, each state is used to indicate that a corresponding PUSCH transmission is a PUSCH transmission that needs to be dropped, where n is a positive integer greater than 1.

In some embodiments, the first indication information indicates, via a bitmap, a PUSCH of the scheduling-free PUSCHs that needs to be dropped.

In some embodiments, the terminal device further includes:
a processing unit, used to determine whether the preset condition is met according to first information, where the first information includes at least one of:
powers of the scheduling-free PUSCHs;
timing advances of the scheduling-free PUSCHs;
a length of time over which the scheduling-free PUSCHs overlap in a time domain;
interference between the scheduling-free PUSCHs; or
signal qualities of the scheduling-free PUSCHs.

In some embodiments, the preset condition includes at least one of:
a difference between the powers of the scheduling-free PUSCHs being greater than or equal to a first threshold;
a difference between the timing advances of the scheduling-free PUSCHs being greater than or equal to a second threshold;
a number of symbols over which the scheduling-free PUSCHs overlap in the time domain being greater than or equal to a third threshold;
a difference or ratio between a strength of the first PUSCH of the scheduling-free PUSCHs and a strength of interference of the second PUSCH of the scheduling-free PUSCHs to the first PUSCH being less than or equal to a fourth threshold;
a difference or ratio between a strength of the second PUSCH of the scheduling-free PUSCHs and a strength of interference of the first PUSCH of the scheduling-free PUSCHs to the second PUSCH being less than or equal to a fifth threshold;
the interference between the scheduling-free PUSCHs being greater than or equal to a sixth threshold; or
a difference between the signal qualities of the scheduling-free PUSCHs being greater than or equal to a seventh threshold.

In some embodiments, the first threshold is predefined, or configured by the network device.

In some embodiments, the second threshold is predefined, or configured by the network device.

In some embodiments, the third threshold is predefined, or configured by the network device.

In some embodiments, the fourth threshold is predefined, or configured by the network device.

In some embodiments, the fifth threshold is predefined, or configured by the network device.

In some embodiments, the sixth threshold is predefined, or configured by the network device.

In some embodiments, the seventh threshold is predefined, or configured by the network device.

In some embodiments, the scheduling-free PUSCHs include the first PUSCH and the second PUSCH. The interference of the first PUSCH to the second PUSCH is determined according to an SRS corresponding to the first PUSCH, or according to the signal quality and beam gain of the first PUSCH. The interference of the second PUSCH to the first PUSCH is determined according to an SRS corresponding to the second PUSCH, or according to the signal quality and beam gain of the second PUSCH.

Optionally, in some embodiments, the communication unit mentioned above may be a communication interface or a transceiver, or an input/output interface of a communication chip or a system on chip. The processing unit may be one or more processors.

It should be understood that the terminal device 400 according to the embodiments of the present application may correspond to the terminal device in the method embodiments of the present application, and the above and other operations and/or functions of various units in the terminal device 400 are for implementing the corresponding process of the terminal device in the method 200 shown in FIGS. 3 to 5, which will not be repeated here for brevity.

FIG. 7 is a schematic block diagram of a network device according to the embodiments of the present application. The network device 500 of FIG. 7 includes:
a communication unit 510, used to receive one or more scheduling-free physical uplink shared channels (PUSCHs). The scheduling-free PUSCHs are associated with different spatial parameters.

In some embodiments, the spatial parameter includes at least one of:
reference signal set information, transmission configuration indicator (TCI) state information, antenna panel information, control resource set group information, or beam information.

In some embodiments, the scheduling-free PUSCHs are configured via a same high-level parameter, or the scheduling-free PUSCHs are configured via different high-level parameters.

In some embodiments, the scheduling-free PUSCHs are associated with different sounding reference signal (SRS) resource set indices.

In some embodiments, the scheduling-free PUSCHs include a first PUSCH and a second PUSCH. The first PUSCH is associated with a first SRS resource set, the second PUSCH is associated with a second SRS resource set, the first SRS resource set is associated with a first control resource set, the second SRS resource set is associated with a second control resource set, and an index of the first control resource set is different from an index of the second control resource set.

In some embodiments, the index of the first control resource set and the index of the second control resource set are predefined, or configured by the network device.

In some embodiments, the scheduling-free PUSCHs overlap in a time domain.

In some embodiments, pieces of precoding information and numbers of layers of the scheduling-free PUSCHs are configured separately.

In some embodiments, SRS resource indicators of the scheduling-free PUSCHs are configured separately.

In some embodiments, the scheduling-free PUSCHs include at least one codebook-based PUSCH and/or at least one non-codebook-based PUSCH.

In some embodiments, maximum numbers of transmission layers corresponding to the scheduling-free PUSCHs are configured separately, or configured via a same high-level parameter.

In some embodiments, the communication unit 510 is further used to:
transmit first indication information. The first indication information is used for indicating a terminal device to transmit one scheduling-free PUSCH or switch to transmitting one scheduling-free PUSCH, the one scheduling-free PUSCH being associated with a first spatial parameter.

In some embodiments, the first indication information is carried in downlink control information (DCI).

In some embodiments, n states of the first indication information correspond to n scheduling-free PUSCH transmissions. Each state is used to indicate that a corresponding PUSCH transmission is a PUSCH transmission that needs to be dropped, where n is a positive integer greater than 1.

In some embodiments, the first indication information indicates, via a bitmap, a PUSCH of the scheduling-free PUSCHs that needs to be dropped.

In some embodiments, the communication unit 510 is further used to:
transmit first configuration information to a terminal device. The first configuration information is used for configuring a determination condition for the terminal device to switch from transmitting the scheduling-free PUSCHs to transmitting one scheduling-free PUSCH.

In some embodiments, the first configuration information is used for configuring at least one of the following thresholds:
a first threshold, a second threshold, a third threshold, a fourth threshold, a fifth threshold, a sixth threshold, or a seventh threshold, wherein
the terminal device switches from transmitting the scheduling-free PUSCHs to transmitting one scheduling-free PUSCH in a case where at least one of the following conditions is met:
   a difference between powers of the scheduling-free PUSCHs being greater than or equal to the first threshold;
   a difference between timing advances of the scheduling-free PUSCHs being greater than or equal to the second threshold;
   a number of symbols over which the scheduling-free PUSCHs overlap in the time domain being greater than or equal to the third threshold;
   a difference or ratio between a strength of the first PUSCH of the scheduling-free PUSCHs and a strength of interference of the second PUSCH of the scheduling-free PUSCHs to the first PUSCH being less than or equal to the fourth threshold;
   a difference or ratio between a strength of the second PUSCH of the scheduling-free PUSCHs and a strength of interference of the first PUSCH of the scheduling-free PUSCHs to the second PUSCH being less than or equal to the fifth threshold;
   interference between the scheduling-free PUSCHs being greater than or equal to the sixth threshold; or
   a difference between signal qualities of the scheduling-free PUSCHs being greater than or equal to the seventh threshold.

Optionally, in some embodiments, the communication unit mentioned above may be a communication interface or a transceiver, or an input/output interface of a communication chip or a system on chip. The processing unit may be one or more processors.

It should be understood that the network device 500 in accordance with the embodiments of the present application may correspond to the network device in the method embodiments of the present application. Moreover, the above and other operations and/or functions of various units in the network device 500 are for implementing the corresponding process of the network device in the method 200 shown in FIGS. 3 to 5, which will not be repeated here for brevity.

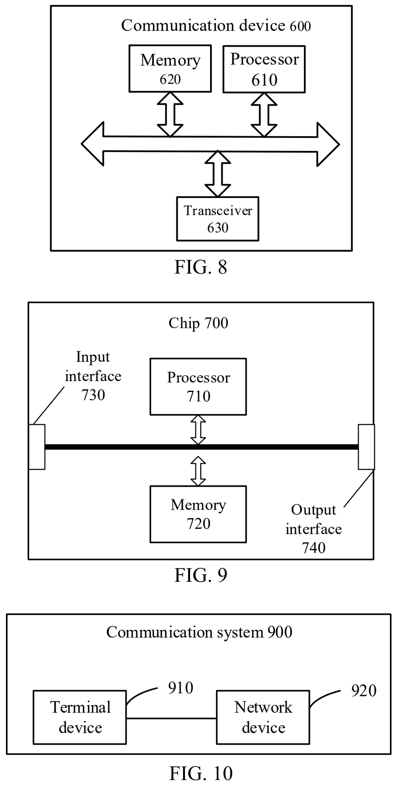

FIG. 8 is a schematic diagram showing a structure of a communication device 600 provided in the embodiments of the present application. The communication device 600 shown in FIG. 8 includes a processor 610. The processor 610 may call and run a computer program from a memory, to implement the method in the embodiments of the present application.

Optionally, as shown in FIG. 8, the communication device 600 may further include a memory 620. The processor 610 may call and run a computer program from the memory 620, to implement the method in the embodiments of the present application.

The memory 620 may be a separate device independent from the processor 610, or may be integrated into the processor 610.

Optionally, as shown in FIG. 8, the communication device 600 may further include a transceiver 630, and the processor 610 may control the transceiver 630 to communicate with other devices, and specifically, to transmit information or data to other devices, or receive information or data transmitted by other devices.

The transceiver 630 may include a transmitter and a receiver. The transceiver 630 may further include antenna(s), and the number of antennas may be one or more.

Optionally, the communication device 600 may specifically be a network device of the embodiments of the present application, and the communication device 600 may implement the corresponding process implementable by the network device in each method of the embodiments of the present application, which will not be repeated here for brevity.

Optionally, the communication device 600 may specifically be a mobile terminal/terminal device of the embodiments of the present application, and the communication device 600 may implement the corresponding process implementable by the mobile terminal/terminal device in each method of the embodiments of the present application, which will not be repeated here for brevity.

FIG. 9 is a schematic diagram showing a structure of a chip according to the embodiments of the present application. The chip 700 shown in FIG. 9 includes a processor 710. The processor 710 may call and run a computer program from a memory, to implement the method in the embodiments of the present application.

Optionally, as shown in FIG. 9, the chip 700 may further include a memory 720. The processor 710 may call and run a computer program from the memory 720, to implement the method in the embodiments of the present application.

The memory 720 may be a separate device independent from the processor 710, or may be integrated into the processor 710.

Optionally, the chip 700 may further include an input interface 730. The processor 710 may control the input interface 730 to communicate with other devices or chips. Specifically, the input interface 730 may obtain information or data transmitted by other devices or chips.

Optionally, the chip 700 may further include an output interface 740. The processor 710 may control the output interface 740 to communicate with other devices or chips. Specifically, the output interface 740 may output information or data to other devices or chips.

Optionally, the chip may be applied to the network device in the embodiments of the present application, and the chip may implement the corresponding process implemented by the network device in the each method of the embodiments of the present application, which will not be repeated here for brevity.

Optionally, the chip may be applied to the mobile terminal/terminal device in the embodiments of the present application, and the chip may implement the corresponding process implemented by the mobile terminal/terminal device in the each method of the embodiments of the present application, which will not be repeated here for brevity.

It should be understood that the chip mentioned in the embodiments of the present application may also be called a system on chip, a system chip, a chip system or a system-on-chip chip, etc.

FIG. 10 is a schematic block diagram of a communication system 900 provided in the embodiments of the present application. As shown in FIG. 10, the communication system 900 includes a terminal device 910 and a network device 920.

The terminal device 910 may be used to implement corresponding functions implementable by the terminal device in the above methods, and the network device 920 may be used to implement corresponding functions implementable by the network device in the above methods, which will not be repeated here for brevity.

It should be understood that the processor in the embodiments of the present application may be an integrated circuit chip with a capability of processing signals. In the implementation process, various steps of the above method embodiments may be completed by an integrated logic circuit of hardware in the processor or instructions in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component, or the like, which can implement or perform various methods, steps and logical block diagrams disclosed in the embodiments of the present application. A general-purpose processor may be a microprocessor, or the processor may be any conventional processor, or the like. The steps of the method disclosed in combination with the embodiments of the present application may be directly embodied as being performed and completed by a hardware decoding processor, or by using a combination of hardware and software modules in the decoding processor. The software module may be located in a mature storage medium in the art such as a random memory, a flash memory, a read-only memory, a programmable read-only memory or electrically erasable programmable memory, a register, or the like. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of illustration, but not limitation, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory of the system and the method described herein is intended to include, but not limited to, these and any other suitable types of memories.

It should be understood that the above memory is exemplary but not limiting illustration, for example, the memory in the embodiments of the present application may be an SRAM, a DRAM, an SDRAM, a DDR SDRAM, an ESDRAM, an SLDRAM, a DR RAM, or the like. That is, the memory in the embodiments of the present application is intended to include, but not limited to, these and any other suitable types of memories.

The embodiments of the present application further provide a computer-readable storage medium for storing a computer program.

Optionally, the computer-readable storage medium may be applied to the network device in the embodiments of the present application, and the computer program causes a computer to perform the corresponding process implementable by the network device in each method of the embodiments of the present application, which will not be repeated here for brevity.

Optionally, the computer-readable storage medium may be applied to the mobile terminal/terminal device in the embodiments of the present application, and the computer program causes a computer to perform the corresponding process implementable by the mobile terminal/terminal device in each method of the embodiments of the present application, which will not be repeated here for brevity.

The embodiments of the present application further provide a computer program product including computer program instructions.

Optionally, the computer program product may be applied to the network device in the embodiments of the present application, and the computer program instructions cause a computer to perform corresponding process implementable by the network device in each method of the embodiments of the present application, which will not be repeated here for brevity.

Optionally, the computer program product may be applied to the mobile terminal/terminal device in the embodiments of the present application, and the computer program instructions cause a computer to perform corresponding process implementable by the mobile terminal/terminal device in each method of the embodiments of the present application, which will not be repeated here for brevity.

The embodiments of the present application further provide a computer program.

Optionally, the computer program may be applied to the network device in the embodiments of the present application. The computer program, when executed on a computer, causes the computer to perform the corresponding process implementable by the network device in each method of the embodiments of the present application, which will not be repeated here for brevity.

Optionally, the computer program may be applied to the mobile terminal/terminal device in the embodiments of the present application. The computer program, when executed on a computer, causes the computer to perform the corresponding process implementable by the mobile terminal/terminal device in each method of the embodiments of the present application, which will not be repeated here for brevity.

Those ordinary skilled in the art may realize that units and algorithm steps of various examples described in combination with the embodiments disclosed herein are capable of being implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, specific working processes of the systems, devices and units described above may refer to corresponding processes in the above method embodiments, which will not be repeated here.

In the several embodiments provided by the present application, it should be understood that the systems, devices, and method disclosed may be implemented in other ways. For example, the apparatus embodiments described above are only schematic, for example, the division of the units is only a division of logical functions, and there may be other division methods in an actual implementation, for example, a plurality of units or components may be combined or integrated into another system, or some features may be ignored or not performed. In addition, the coupling or direct coupling or communicative connection between each other as shown or discussed may be indirect coupling or communicative connection of devices or units through some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If being implemented in the form of a software functional unit and sold or used as an independent product, the described functions may be stored in a computer-readable storage medium. Based on such understanding, the technical solution of the present application essentially, or a part of the technical solution that contributes to the prior art, or a part of the technical solution, may be embodied in the form of a software product, and the computer software product is stored in a storage medium, and includes several instructions for enabling a computer device (which may be a personal computer, a server, or a network device, etc.) to perform all or some of the steps of the methods described in the various embodiments of the present application. Moreover, the storage mediums mentioned above include various mediums capable of storing program codes, such as a USB flash drive (U disk), a mobile hard disk, a read-only memory (ROM), a random access memory (RAM), a diskette, or an optical disk.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, comprising:
transmitting, by a terminal device, one or more scheduling-free physical uplink shared channels (PUSCHs), wherein the scheduling-free PUSCHs are associated with different spatial parameters.

2. The method according to claim 1, wherein a spatial parameter comprises at least one of:
reference signal set information, transmission configuration indicator (TCI) state information, antenna panel information, control resource set group information, or beam information.

3. The method according to claim 1 or 2, wherein the scheduling-free PUSCHs are configured via a same high-level parameter, or the scheduling-free PUSCHs are configured via different high-level parameters.

4. The method according to any one of claims 1 to 3, wherein the scheduling-free PUSCHs are associated with different sounding reference signal (SRS) resource set indices.

5. The method according to claim 4, wherein the scheduling-free PUSCHs comprise a first PUSCH and a second PUSCH, the first PUSCH is associated with a first SRS resource set, the second PUSCH is associated with a second SRS resource set, the first SRS resource set is associated with a first control resource set, the second SRS resource set is associated with a second control resource set, and an index of the first control resource set is different from an index of the second control resource set.

6. The method according to claim 5, wherein the index of the first control resource set and the index of the second control resource set are predefined, or configured by a network device.

7. The method according to any one of claims 1 to 6, wherein the scheduling-free PUSCHs overlap in a time domain.

8. The method according to any one of claims 1 to 7, wherein pieces of precoding information and numbers of layers of the scheduling-free PUSCHs are configured separately.

9. The method according to any one of claims 1 to 8, wherein SRS resource indicators of the scheduling-free PUSCHs are configured separately.

10. The method according to any one of claims 1 to 9, wherein the scheduling-free PUSCHs comprise at least one codebook-based PUSCH and/or at least one non-codebook-based PUSCH.

11. The method according to any one of claims 1 to 10, wherein maximum numbers of transmission layers corresponding to the scheduling-free PUSCHs are configured separately, or configured via a same high-level parameter.

12. The method according to any one of claims 1 to 11, wherein in a case where the terminal device has configuration information of the scheduling-free PUSCHs, the method further comprises:
determining to transmit one scheduling-free PUSCH according to first indication information of a network device; or
determining to transmit one scheduling-free PUSCH in a case where a preset condition is met, wherein
the one scheduling-free PUSCH is associated with a first spatial parameter or a second spatial parameter, and the spatial parameters associated with the scheduling-free PUSCHs comprise the first spatial parameter and the second spatial parameter.

13. The method according to claim 12, wherein the first indication information is carried in downlink control information (DCI) or a media access control control element (MAC CE).

14. The method according to claim 12 or 13, wherein n states of the first indication information correspond to n scheduling-free PUSCH transmissions, and each state is used for indicating that a corresponding PUSCH transmission is a PUSCH transmission that needs to be dropped, wherein n is a positive integer greater than 1.

15. The method according to claim 12 or 13, wherein the first indication information indicates, via a bitmap, a PUSCH of the scheduling-free PUSCHs that needs to be dropped.

16. The method according to claim 12, wherein the method further comprises:
determining whether the preset condition is met according to first information, wherein the first information comprises at least one of:
powers of the scheduling-free PUSCHs;
timing advances of the scheduling-free PUSCHs;
a length of time over which the scheduling-free PUSCHs overlap in a time domain;
interference between the scheduling-free PUSCHs; or
signal qualities of the scheduling-free PUSCHs.

17. The method according to claim 16, wherein the preset condition comprises at least one of:
a difference between the powers of the scheduling-free PUSCHs being greater than or equal to a first threshold;
a difference between the timing advances of the scheduling-free PUSCHs being greater than or equal to a second threshold;
a number of symbols over which the scheduling-free PUSCHs overlap in the time domain being greater than or equal to a third threshold;
a difference or ratio between a strength of a first PUSCH of the scheduling-free PUSCHs and a strength of interference of a second PUSCH of the scheduling-free PUSCHs to the first PUSCH being less than or equal to a fourth threshold;
a difference or ratio between a strength of the second PUSCH of the scheduling-free PUSCHs and a strength of interference of the first PUSCH of the scheduling-free PUSCHs to the second PUSCH being less than or equal to a fifth threshold;
the interference between the scheduling-free PUSCHs being greater than or equal to a sixth threshold;
or
a difference between the signal qualities of the scheduling-free PUSCHs being greater than or equal to a seventh threshold.

18. The method according to claim 17, wherein the first threshold is predefined, or configured by a network device.

19. The method according to claim 17 or 18, wherein the second threshold is predefined, or configured by a network device.

20. The method according to any one of claims 17 to 19, wherein the third threshold is predefined, or configured by a network device.

21. The method according to any one of claims 17 to 20, wherein the fourth threshold is predefined, or configured by a network device.

22. The method according to any one of claims 17 to 21, wherein the fifth threshold is predefined, or configured by a network device.

23. The method according to any one of claims 17 to 22, wherein the sixth threshold is predefined, or configured by a network device.

24. The method according to any one of claims 17 to 23, wherein the seventh threshold is predefined, or configured by a network device.

25. The method according to any one of claims 16 to 24, wherein the scheduling-free PUSCHs comprise a first PUSCH and a second PUSCH, wherein interference of the first PUSCH to the second PUSCH is determined according to an SRS corresponding to the first PUSCH or according to a signal quality and beam gain of the first PUSCH; interference of the second PUSCH to the first PUSCH is determined according to an SRS corresponding to the second PUSCH or according to a signal quality and beam gain of the second PUSCH.

26. A wireless communication method, comprising:
receiving, by a network device, one or more scheduling-free physical uplink shared channels (PUSCHs), wherein the scheduling-free PUSCHs are associated with different spatial parameters.

27. The method according to claim 26, wherein a spatial parameter comprises at least one of:
reference signal set information, transmission configuration indicator (TCI) state information, antenna panel information, control resource set group information, or beam information.

28. The method according to claim 26 or 27, wherein the scheduling-free PUSCHs are configured via a same high-level parameter, or the scheduling-free PUSCHs are configured via different high-level parameters.

29. The method according to any one of claims 26 to 28, wherein the scheduling-free PUSCHs are associated with different sounding reference signal (SRS) resource set indices.

30. The method according to claim 29, wherein the scheduling-free PUSCHs comprise a first PUSCH and a second PUSCH, the first PUSCH is associated with a first SRS resource set, the second PUSCH is associated with a second SRS resource set, the first SRS resource set is associated with a first control resource set, the second SRS resource set is associated with a second control resource set, and an index of the first control resource set is different from an index of the second control resource set.

31. The method according to claim 30, wherein the index of the first control resource set and the index of the second control resource set are predefined, or configured by a network device.

32. The method according to any one of claims 26 to 31, wherein the scheduling-free PUSCHs overlap in a time domain.

33. The method according to any one of claims 26 to 32, wherein pieces of precoding information and numbers of layers of the scheduling-free PUSCHs are configured separately.

34. The method according to any one of claims 26 to 33, wherein SRS resource indicators of the scheduling-free PUSCHs are configured separately.

35. The method according to any one of claims 26 to 34, wherein the scheduling-free PUSCHs comprise at least one codebook-based PUSCH and/or at least one non-codebook-based PUSCH.

36. The method according to any one of claims 26-35, wherein maximum numbers of transmission layers corresponding to the scheduling-free PUSCHs are configured separately, or configured via a same high-level parameter.

37. The method according to any one of claims 26 to 36, wherein the method further comprises:
transmitting, by the network device, first indication information, wherein the first indication information is used for indicating a terminal device to switch to transmitting one scheduling-free PUSCH, the one scheduling-free PUSCH being associated with a first spatial parameter.

38. The method according to claim 37, wherein the first indication information is carried in downlink control information (DCI).

39. The method according to claim 37 or 38, wherein n states of the first indication information correspond to n scheduling-free PUSCH transmissions, and each state is used for indicating that a corresponding PUSCH transmission is a PUSCH transmission that needs to be dropped, wherein n is a positive integer greater than 1.

40. The method according to claim 37 or 38, wherein the first indication information indicates, via a bitmap, a PUSCH of the scheduling-free PUSCHs that needs to be dropped.

41. The method according to any one of claims 26 to 36, wherein the method further comprises:
transmitting, by the network device, first configuration information to a terminal device, wherein the first configuration information is used for configuring a determination condition for the terminal device to switch from transmitting scheduling-free PUSCHs to transmitting one scheduling-free PUSCH.

42. The method according to claim 41, wherein the first configuration information is used for configuring at least one of the following thresholds:
a first threshold, a second threshold, a third threshold, a fourth threshold, a fifth threshold, a sixth threshold, or a seventh threshold;
the terminal device switches from transmitting the scheduling-free PUSCHs to transmitting the one scheduling-free PUSCH in a case where at least one of the following conditions is met:
a difference between powers of the scheduling-free PUSCHs being greater than or equal to the first threshold;
a difference between timing advances of the scheduling-free PUSCHs being greater than or equal to the second threshold;
a number of symbols over which the scheduling-free PUSCHs overlap in the time domain being greater than or equal to the third threshold;
a difference or ratio between a strength of a first PUSCH of the scheduling-free PUSCHs and a strength of interference of a second PUSCH of the scheduling-free PUSCHs to the first PUSCH being less than or equal to the fourth threshold;
a difference or ratio between a strength of the second PUSCH of the scheduling-free PUSCHs and a strength of interference of the first PUSCH of the scheduling-free PUSCHs to the second PUSCH being less than or equal to the fifth threshold;
interference between the scheduling-free PUSCHs being greater than or equal to the sixth threshold;
or
a difference between signal qualities of the scheduling-free PUSCHs being greater than or equal to the seventh threshold.

43. A terminal device, comprising:
a communication unit, used for transmitting one or more scheduling-free physical uplink shared channels (PUSCHs), wherein the scheduling-free PUSCHs are associated with different spatial parameters.

44. A network device, wherein the network device comprising:
a communication unit, used for receiving one or more scheduling-free physical uplink shared channels (PUSCHs), wherein the scheduling-free PUSCHs are associated with different spatial parameters.

45. A terminal device, wherein the terminal device comprises a processor and a memory, the memory is used for storing a computer program, and the processor is used for calling and running the computer program stored in the memory to perform the method according to any one of claims 1 to 25.

46. A network device, wherein the network device comprises a processor and a memory, the memory is used for storing a computer program, and the processor is used for calling and running the computer program stored in the memory to perform the method according to any one of claims 26 to 42.

47. A chip, wherein the chip comprises a processor used for calling and running a computer program from a memory to cause a device equipped with the chip to perform the method according to any one of claims 1 to 25, or the method according to any one of claims 26 to 42.

48. A computer-readable storage medium, wherein the computer-readable storage medium is used for storing a computer program, and the computer program causes a computer to perform the method according to any one of claims 1 to 25, or the method according to any one of claims 26 to 42.

49. A computer program product, wherein the computer program product comprises computer program instructions, the computer program instructions cause a computer to perform the method according to any one of claims 1 to 25, or the method according to any one of claims 26 to 42.

50. A computer program, wherein the computer program causes a computer to perform the method according to any one of claims 1 to 25, or the method according to any one of claims 26 to 42.
